# EUROPEAN PATENT APPLICATION

(11) **EP 3 349 463 A1**
(43) Date of publication of application: **18.07.2018**
(21) Application number: 17305030.3
(22) Date of filing: 11.01.2017
(51) Int. Cl.: H04N 19/593, G06T 17/00, G06T 17/10, H04N 13/00

(54) **METHOD AND APPARATUS FOR CODING/DECODING A PICTURE OF AN OMNIDIRECTIONAL VIDEO**

(71) Applicant: Thomson Licensing, 92130 Issy-les-Moulineaux (FR)
(72) Inventor: GALPIN, Franck, 35576 CESSON-SEVIGNE (FR); RACAPE, Fabien, 35576 CESSON-SEVIGNE (FR); FRANCOIS, Edouard, 35576 CESSON-SEVIGNE (FR)
(74) Representative: Huchet, Anne

(57) **Abstract**

The present disclosure relates to a method and apparatus for coding a plurality of 2D pictures representative of picture data of an omnidirectional video into a bitstream, characterized in that the method comprises:
- coding the 2D pictures of said plurality of 2D pictures independently of each other, at least one of said 2D pictures being predictive-coded using at least one 2D references picture; and
- when a coded 2D picture of said plurality of 2D pictures is used as a 2D reference picture for predictive-coding, spatially extending a decoded version of said coded 2D picture, using at least another coded 2D picture of said plurality of 2D pictures, once a decoded version of said at least another coded 2D picture is available.

## Description

### 1. Technical field

The present disclosure relates to encoding and decoding a picture of an omnidirectional video, for example when such omnidirectional videos are processed in a system for virtual reality, augmented reality or augmented virtuality and for instance when displayed in a head mounted display device.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

Recently there has been a growth of available large field-of-view content (up to 360°). Such content is potentially not fully visible by a user watching the content on immersive display devices such as Head Mounted Displays, smart glasses, PC screens, tablets, smartphones and the like. That means that at a given moment, a user may only be viewing a part of the content. Although a user can navigate within the content by various means such as head movement, mouse movement, touch screen, voice and the like. A large field-of-view content may be, among others, a three-dimension computer graphic imagery scene (3D CGI scene), a point cloud or an immersive video.

Many terms might be used to design such immersive videos: Virtual Reality (VR), 360, panoramic, 4π steradians, omnidirectional, large field of view, etc. In the following we will use the term omnidirectional.

For coding an omnidirectional video into a bitstream, for instance for transmission over a data network, traditional video coder/decoder, such as HEVC, H.264/AVC, could be used. Each picture of the omnidirectional video is thus first projected on a plurality of 2D pictures, for example rectangular 2D pictures, using a suitable projection function (mapping). In practice, a picture of the omnidirectional video is represented as a 3D surface. For ease of projection, usually a convex and simple surface such as a sphere, or a cube, or a pyramid are used for the projection. The plurality of 2D pictures representative of a picture of the omnidirectional video are then packed into a frame FR which is then coded/decoded using a traditional video coder/decoder such as HEVC, H.264/AVC, etc....

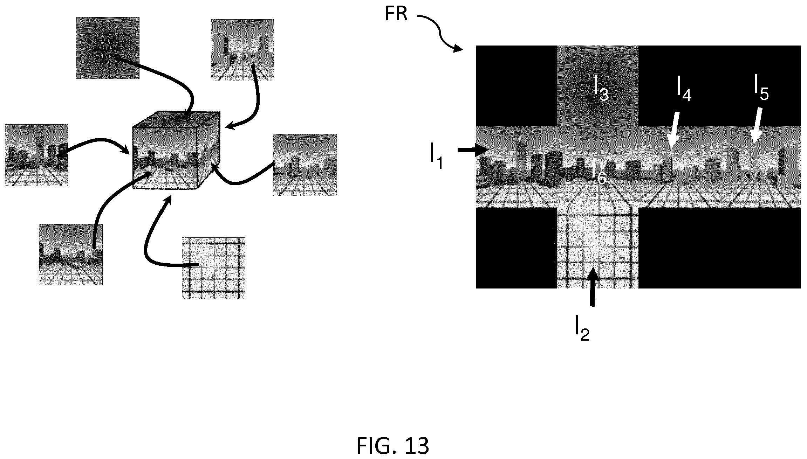

**Figure 13** shows an example of projection from a surface S represented as a sphere onto a plurality of 2D pictures using a cubic mapping where the six 2D pictures, each representative of a face of the cubic representation, are packed into a frame FR according to a specific layout.

The frame FR is then encoded using traditional video coder/decoder as follows. First the encoder divides the frame FR into non-overlapping blocks and then predictive-encodes those blocks individually from reference blocks of 2D reference pictures. Thus, encoding said frame FR using such traditional video encoder/decoder comprises dividing said frame FR into non-overlapping blocks, and predictive-encoding each of those blocks from at least one reference block of a 2D reference picture representative of other picture data of said omnidirectional video when an inter-prediction mode is used, i.e. when a motion vector and an index of an already coded/decoded reference picture are determined in order to indicate which block of said coded/decoded reference picture has to be used for predicting the current block to be encoded.

Encoding the frame FR using traditional encoder/decoder increases the complexity of the encoding/decoding because the size of the frame FR is greater than the size of a 2D pictures.

Furthermore, a motion vector used by the inter-prediction mode may indicate a block (point to a block) which is only partially contained in the 2D reference picture, i.e. a block whose pixel values are only partially known. In that case, traditional coders/decoders use a padding process which determines the unknown pixel values of the block from the known pixel values of the 2D reference picture.

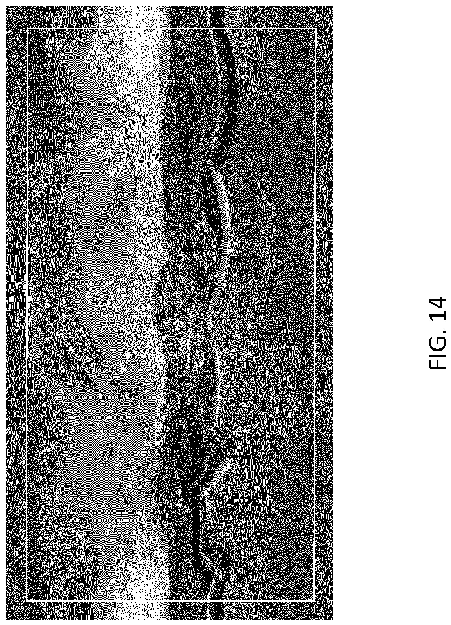

**Figure 14** illustrates a typical padding process usually used in traditional video coders/decoders. The white line delimits the border of the 2D reference picture. In this example, the padding process consists in clipping the pixels which go over a border, i.e. for example, in assigning the pixel value of the pixels located on the border of the reference picture to the pixels which go over the border. Another example of padding process is to mirror the pixels according to the border of the 2D reference picture.

A padding process allows unrestricted motion vectors and thus simplifies the coder/decoder but usually decreases the coding efficiency because of the low quality of the prediction when most of the pointed block is located outside the 2D reference picture.

There is thus a need for improving the performances of traditional video coders/decoders when coding/decoding a frame composed of a plurality of 2D pictures representative of picture data of an omnidirectional video.

### 3. Summary

The following presents a simplified summary of the present principles in order to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

The present principles set out to remedy at least one of the drawbacks of the prior art with a method for coding a plurality of 2D pictures representative of picture data of an omnidirectional video into a bitstream. The method is characterized in that it comprises
- coding the 2D pictures of said plurality of 2D pictures independently of each other, at least one of said 2D pictures being predictive-coded using at least one 2D references picture; and
- when a coded 2D picture of said plurality of 2D pictures is used as a 2D reference picture for predictive-coding, spatially extending a decoded version of said coded 2D picture, using at least another coded 2D picture of said plurality of 2D pictures, once a decoded version of said at least another coded 2D picture is available.

According to another of their aspects, the present principles relate to a method for decoding a plurality of 2D pictures representative of picture data of an omnidirectional video from a bitstream. The method is characterized in that it comprises:
- decoding the 2D pictures of said plurality of 2D pictures independently of each other, at least one of said 2D pictures being predictive-decoded using at least one 2D references picture; and
- when a decoded 2D picture of said plurality of 2D pictures is used as a 2D reference picture for predictive-decoding, spatially extending said decoded 2D picture using at least another coded 2D picture of said plurality of 2D pictures once a decoded version of said at least another coded 2D picture is available.

According to other of their aspects, the present principles relate to apparatus comprising means for implementing the above methods, a computer program product comprising software code instructions for performing the above methods, an immersive rendering device comprising an apparatus for decoding a bitstream representative of an omnidirectional video, a system for immersive rendering of an omnidirectional video encoded into a bitstream, and a bitstream comprising coded data representative of coded 2D pictures of a plurality of 2D pictures representative of picture data of an omnidirectional video.

### 4. Brief description of the drawings

- **Figure 1** represents a functional overview of an encoding and decoding system according to an example environment of the embodiments of the present principles;
- **Figure 2** represents a first embodiment of a system, according to a particular embodiment of the present principles;
- **Figure 3** represents a first embodiment of a system, according to a particular embodiment of the present principles;
- **Figure 4** represents a first embodiment of a system, according to a particular embodiment of the present principles;
- **Figure 5** represents a first embodiment of a system, according to a particular embodiment of the present principles;
- **Figure 6** represents a first embodiment of a system, according to a particular embodiment of the present principles;
- **Figure 7** represents a first embodiment of a system, according to a particular embodiment of the present principles;
- **Figure 8** represents a first embodiment of a system according to the present disclosure;
- **Figure 9** represents a first embodiment of a system according to the present disclosure;
- **Figure 10** represents a first embodiment of an immersive video rendering device according to the present disclosure;
- **Figure 11** represents a first embodiment of an immersive video rendering device according to the present disclosure;
- **Figure 12** represents a first embodiment of an immersive video rendering device according to the present disclosure;
- **Figure 13** shows an example of projection from a surface S represented as a sphere onto a plurality of 2D pictures using a cubic mapping;
- **Figure 14** illustrates a usual padding process usually used in traditional video coder/decoder;
- **Figure 15** illustrates a block diagram of the method for encoding a plurality of 2D pictures into a bitstream in accordance with an example of the present principles;
- **Figure 16** illustrates a block diagram of the method for decoding a plurality of 2D pictures from a bitstream STR in accordance with an example of the present principles;
- **Figure 17** illustrates a usual Group Of Picture (GOP) structure;
- **Figure 18** illustrates a GOP structure in accordance with an example of the present principles;
- **Figure 19** illustrates block diagrams for an exemplary video encoder implementing a method for encoding a 2D picture representative of picture data of an omnidirectional video into a bitstream in accordance with an example of the present principles;
- **Figure 20** illustrates block diagrams for an exemplary decoder implementing a method for decoding a 2D picture representative of picture data of an omnidirectional video from a bitstream in accordance with an example of the present principles;
- **Figure 21** illustrates the simplified structure of an apparatus for coding a 2D picture representative of picture data of an omnidirectional video into a bitstream in accordance with an example of the present principles;
- **Figure 22** illustrates the simplified structure of an apparatus for decoding a 2D picture representative of picture data of an omnidirectional video from a bitstream in accordance with an example of the present principles; and
- **Figure 23A-B** illustrate the spatial extension principles when the plurality of 2D pictures is packed into a composite frame according to specific layouts.

### 5. Description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims.

While not explicitly described, the present examples and variants may be employed in any combination or sub-combination.

An omnidirectional video typically refers to a video encoded on a frame FR that is a 2D array of pixels (i.e. element of color information) like a "regular" video. In many implementations, the following processes may be performed. To be rendered, the frame is, first, mapped on the inner face of a convex volume, also called mapping surface (e.g. a sphere, a cube, a pyramid), and, second, a part of this volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device.

Pixels may be encoded according to a mapping function in the frame. The mapping function may depend on the mapping surface. For a same mapping surface, several mapping functions are possible. For example, the faces of a cube may be structured according to different layouts within the frame surface. A sphere may be mapped according to an equirectangular projection or to a gnomonic projection for example. The organization of pixels resulting from the selected projection function modifies or breaks lines continuities, orthonormal local frame, pixel densities and introduces periodicity in time and space. These are typical features that are used to encode and decode videos. There is a lack of taking specificities of omnidirectional videos into account in encoding and decoding methods. Indeed, as omnidirectional videos are 360° videos, a panning, for example, introduces motion and discontinuities that require a large amount of data to be encoded while the content of the scene does not change. Taking omnidirectional videos specificities into account while encoding and decoding video frames would bring valuable advantages to the state-of-art methods.

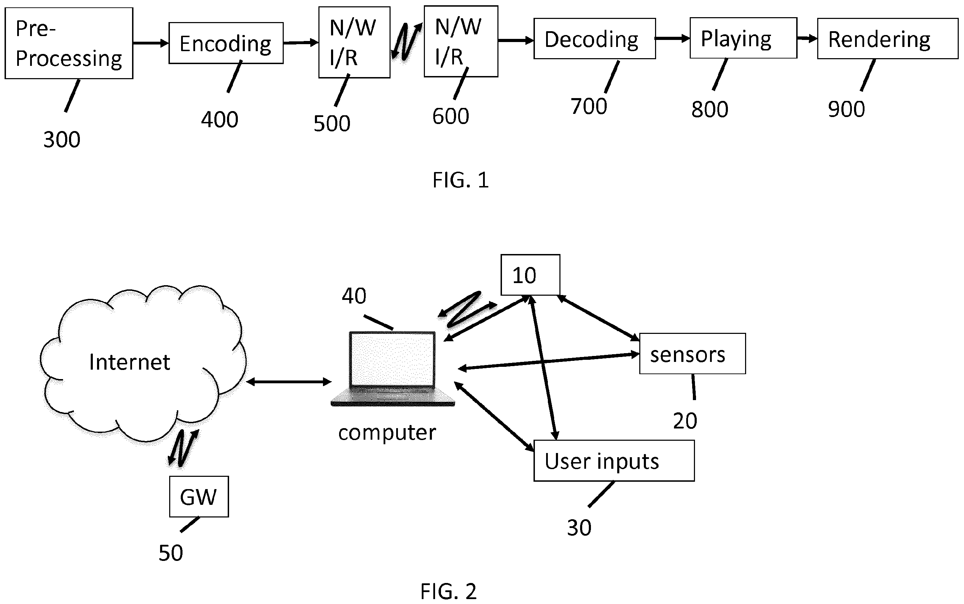

**Figure 1** illustrates a general overview of an encoding and decoding system according to an example embodiment. The system of **Figure 1** is a functional system. A pre-processing module 300 may prepare the content for encoding by the encoding device 400. The pre-processing module 300 may perform multi-image acquisition, merging of the acquired multiple images in a common space (typically a 3D sphere if we encode the directions), and mapping of the 3D sphere into a plurality of 2D pictures I_{f} with F∈ {1, ... , *F*}where F is the number of 2D pictures.

The pre-processing module 300 may also accept an omnidirectional video in a particular format (for example, equirectangular) as input, and pre-processes the video to change the mapping into a format more suitable for encoding. Depending on the acquired video data representation, the pre-processing module 300 may perform a mapping space change. The encoding device 400 and the encoding method will be described with respect to other figures of the specification. After being encoded, the data, which may represent omnidirectional video data or 3D CGI encoded data for instance, are sent to a network interface 500, which can be implemented in any network interface, for instance present in a gateway. The data are then transmitted through a communication network, such as internet but any other network can be foreseen. Then the data are received via network interface 600. Network interface 600 can be implemented in a gateway, in a television, in a set-top box, in a head mounted display device, in an immersive (projective) wall or in any immersive video rendering device. After reception, the data are sent to a decoding device 700.

Decoding function is one of the processing functions described in the following **Figures 2** to **12****.** Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In a variant, the player 800 is integrated in the rendering device 900.

Several types of systems may be envisioned to perform the decoding, playing and rendering functions of an immersive display device, for example when rendering an omnidirectional video.

A first system, for processing augmented reality, virtual reality, or augmented virtuality content is illustrated in **Figures 2** to **6****.** Such a system comprises processing functions, an omnidirectional video rendering device which may be a head-mounted display (HMD), a tablet or a smartphone for example and may comprise sensors. The omnidirectional video rendering device may also comprise additional interface modules between the display device and the processing functions. The processing functions can be performed by one or several devices. They can be integrated into the omnidirectional video rendering device or they can be integrated into one or several processing devices. The processing device comprises one or several processors and a communication interface with the omnidirectional video rendering device, such as a wireless or wired communication interface.

The processing device can also comprise a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as a IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system comprises an auxiliary device which communicates with the immersive video rendering device and with the processing device. In such an embodiment, this auxiliary device can contain at least one of the processing functions.

The immersive video rendering device may comprise one or several displays. The device may employ optics such as lenses in front of each of its display. The display can also be a part of the immersive display device like in the case of smartphones or tablets. In another embodiment, displays and optics may be embedded in a helmet, in glasses, or in a visor that a user can wear. The immersive video rendering device may also integrate several sensors, as described later on. The immersive video rendering device can also comprise several interfaces or connectors. It might comprise one or several wireless modules in order to communicate with sensors, processing functions, handheld or other body parts related devices or sensors.

The immersive video rendering device can also comprise processing functions executed by one or several processors and configured to decode content or to process content. By processing content here, it is understood all functions to prepare a content that can be displayed. This may comprise, for instance, decoding a content, merging content before displaying it and modifying the content to fit with the display device.

One function of an immersive content rendering device is to control a virtual camera which captures at least a part of the content structured as a virtual volume. The system may comprise pose tracking sensors which totally or partially track the user's pose, for example, the pose of the user's head, in order to process the pose of the virtual camera. Some positioning sensors may track the displacement of the user. The system may also comprise other sensors related to environment for example to measure lighting, temperature or sound conditions. Such sensors may also be related to the users' bodies, for instance, to measure sweating or heart rate. Information acquired through these sensors may be used to process the content. The system may also comprise user input devices (e.g. a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Using **Figures 2** to **6****,** several embodiments are described of this first type of system for displaying augmented reality, virtual reality, augmented virtuality or any content from augmented reality to virtual reality.

**Figure 2** illustrates a particular embodiment of a system configured to decode, process and render immersive videos. The system comprises an immersive (omnidirectional) video rendering device 10, sensors 20, user inputs devices 30, a computer 40 and a gateway 50 (optional).

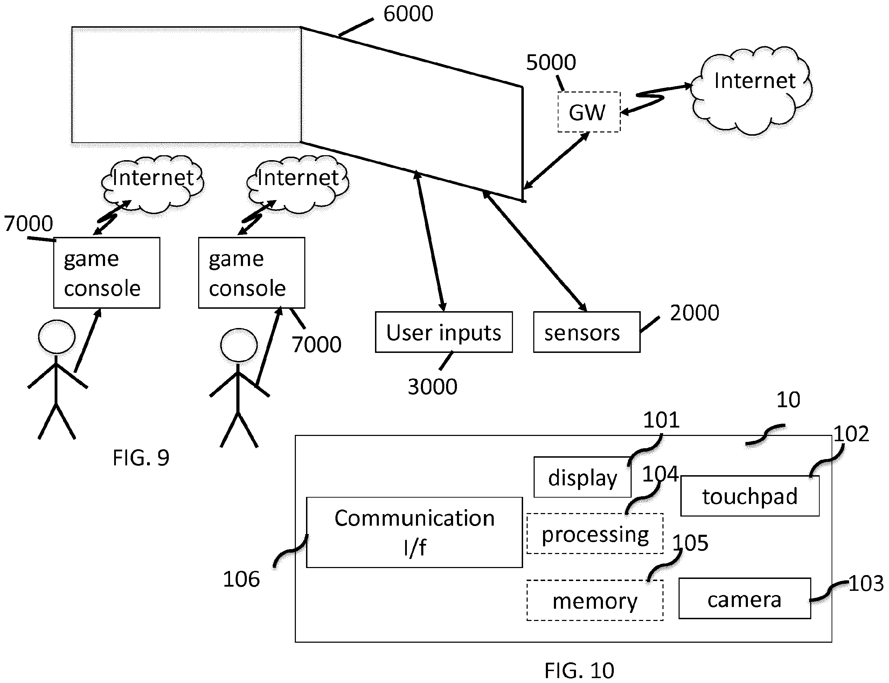

The immersive video rendering device 10, illustrated in **Figure 10****,** comprises a display 101. The display is, for example of OLED or LCD type. The immersive video rendering device 10 is, for instance a HMD, a tablet or a smartphone. The device 10 may comprise a touch surface 102 (e.g. a touchpad or a tactile screen), a camera 103, a memory 105 in connection with at least one processor 104 and at least one communication interface 106. The at least one processor 104 processes the signals received from the sensors 20. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Data from sensors 20 and user input devices 30 can also be transmitted to the computer 40 which will process the data according to the input of these sensors.

Memory 105 includes parameters and code program instructions for the processor 104. Memory 105 can also comprise parameters received from the sensors 20 and user input devices 30. Communication interface 106 enables the immersive video rendering device to communicate with the computer 40. The Communication interface 106 of the processing device is wireline interfaces (for example a bus interface, a wide area network interface, a local area network interface) or wireless interfaces (such as a IEEE 802.11 interface or a Bluetooth® interface). Computer 40 sends data and optionally control commands to the immersive video rendering device 10. The computer 40 is in charge of processing the data, i.e. prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g. decodes them and possibly prepares the part of the video content that is going to be displayed by the immersive video rendering device 10) and sends the processed data to the immersive video rendering device 10 for display. In a variant, the system may also comprise local storage (not represented) where the data representative of an immersive video are stored, said local storage can be on the computer 40 or on a local server accessible through a local area network for instance (not represented).

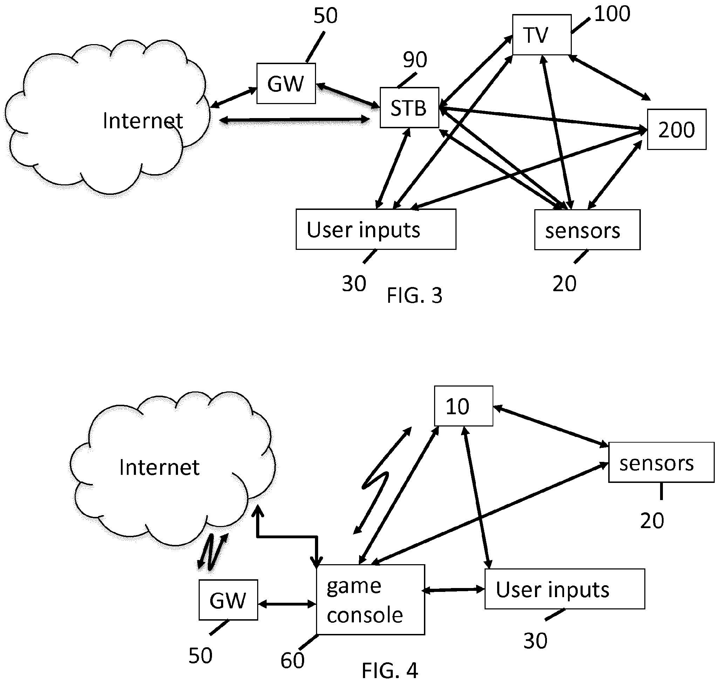

**Figure 3** represents a second embodiment. In this embodiment, a STB 90 is connected to a network such as internet directly (i.e. the STB 90 comprises a network interface) or via a gateway 50. The STB 90 is connected through a wireless interface or through a wired interface to rendering devices such as a television set 100 or an immersive video rendering device 200. In addition to classic functions of a STB, STB 90 comprises processing functions to process video content for rendering on the television 100 or on any immersive video rendering device 200. These processing functions are the same as the ones that are described for computer 40 and are not described again here. Sensors 20 and user input devices 30 are also of the same type as the ones described earlier with regards to **Figure 2****.** The STB 90 obtains the data representative of the immersive video from the internet. In a variant, the STB 90 obtains the data representative of the immersive video from a local storage (not represented) where the data representative of the immersive video are stored.

**Figure 4** represents a third embodiment related to the one represented in **Figure 2****.** The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In a variant, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g. decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

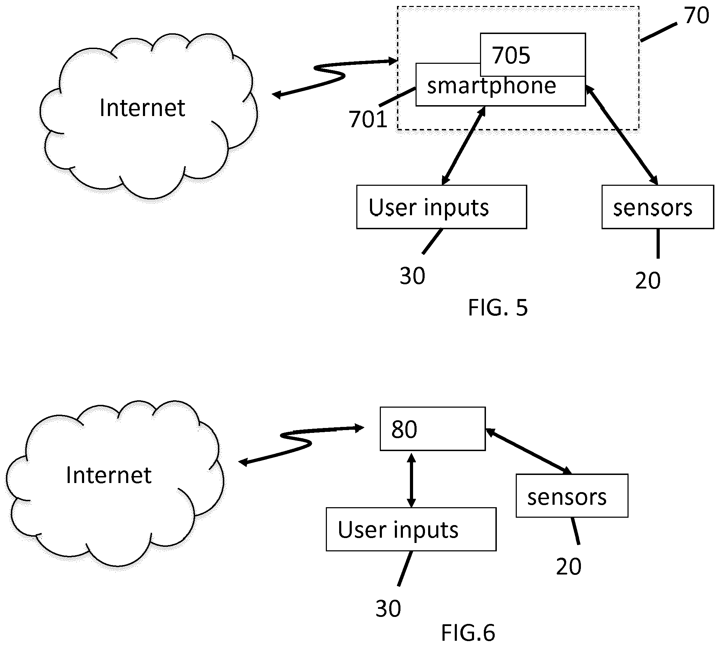

**Figure 5** represents a fourth embodiment of said first type of system where the immersive video rendering device 70 is formed by a smartphone 701 inserted in a housing 705. The smartphone 701 may be connected to internet and thus may obtain data representative of an immersive video from the internet. In a variant, the smartphone 701 obtains data representative of an immersive video from a local storage (not represented) where the data representative of an immersive video are stored, said local storage can be on the smartphone 701 or on a local server accessible through a local area network for instance (not represented).

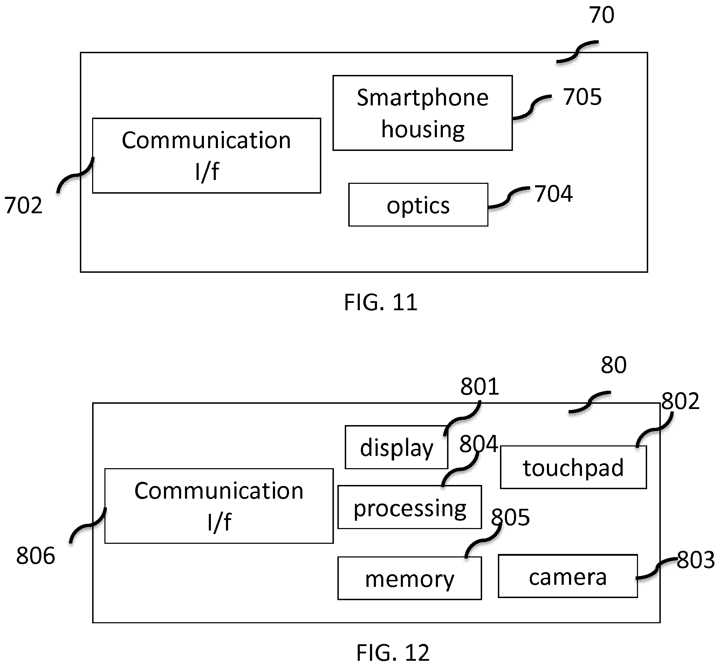

Immersive video rendering device 70 is described with reference to **Figure 11** which gives a preferred embodiment of immersive video rendering device 70. It optionally comprises at least one network interface 702 and the housing 705 for the smartphone 701. The smartphone 701 comprises all functions of a smartphone and a display. The display of the smartphone is used as the immersive video rendering device 70 display. Therefore no display other than the one of the smartphone 701 is included. However, optics 704, such as lenses, are included for seeing the data on the smartphone display. The smartphone 701 is configured to process (e.g. decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

**Figure 6** represents a fifth embodiment of said first type of system in which the immersive video rendering device 80 comprises all functionalities for processing and displaying the data content. The system comprises an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to internet and thus may obtain data representative of an immersive video from the internet. In a variant, the immersive video rendering device 80 obtains data representative of an immersive video from a local storage (not represented) where the data representative of an immersive video are stored, said local storage can be on the rendering device 80 or on a local server accessible through a local area network for instance (not represented).

The immersive video rendering device 80 is illustrated in Figure 12. The immersive video rendering device comprises a display 801. The display can be for example of OLED or LCD type, a touchpad (optional) 802, a camera (optional) 803, a memory 805 in connection with at least one processor 804 and at least one communication interface 806. Memory 805 comprises parameters and code program instructions for the processor 804. Memory 805 can also comprise parameters received from the sensors 20 and user input devices 30. Memory can also be large enough to store the data representative of the immersive video content. For this several types of memories can exist and memory 805 can be a single memory or can be several types of storage (SD card, hard disk, volatile or non-volatile memory...) Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

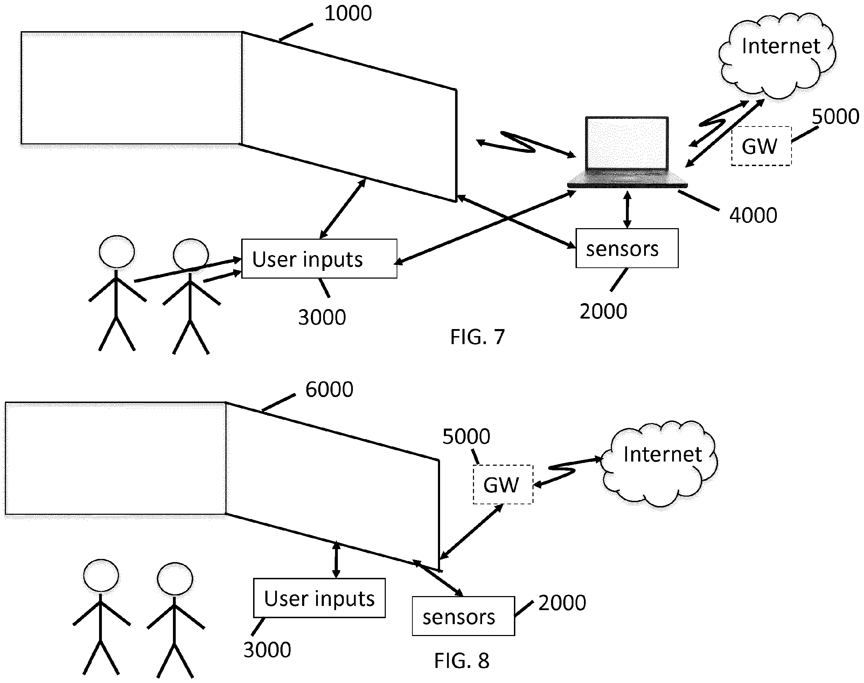

A second system, for processing augmented reality, virtual reality, or augmented virtuality content is illustrated in **Figures 7** to **9****.** Such a system comprises an immersive wall.

**Figure 7** represents a system of the second type. It comprises a display 1000 which is an immersive (projective) wall which receives data from a computer 4000. The computer 4000 may receive immersive video data from the internet. The computer 4000 is usually connected to internet, either directly or through a gateway 5000 or network interface. In a variant, the immersive video data are obtained by the computer 4000 from a local storage (not represented) where the data representative of an immersive video are stored, said local storage can be in the computer 4000 or in a local server accessible through a local area network for instance (not represented).

This system may also comprise sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g. position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e. preparing them for display, to be displayed by the immersive wall 1000. Processing can be done exclusively by the computer 4000 or part of the processing can be done by the computer 4000 and part by the immersive wall 1000.

**Figure 8** represents another system of the second type. It comprises an immersive (projective) wall 6000 which is configured to process (e.g. decode and prepare data for display) and display the video content. It further comprises sensors 2000, user input devices 3000.

The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also comprise sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g. position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.

**Figure 9** illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also comprise internal memory to store the content to be displayed.

A pre-processing module 300 may prepare the content for encoding by the encoding device 400. The pre-processing module 300 may perform multi-image acquisition, merging of the acquired multiple images in a common space (typically a 3D sphere if we encode the directions), and mapping of the 3D sphere into a plurality of 2D pictures I_{f} with f∈ {1, ..., *F*} where F is the number of 2D pictures.

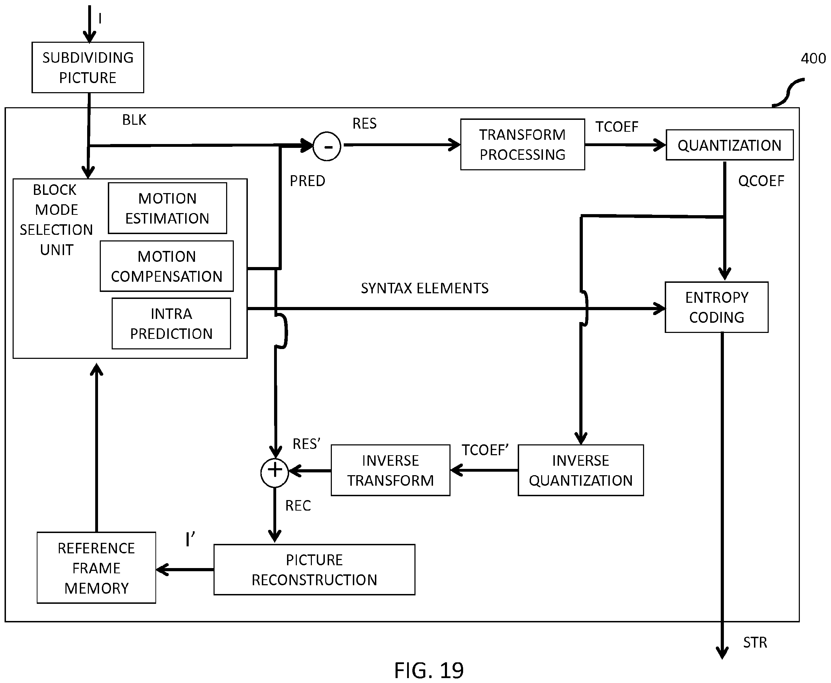

As mentioned above, the 2D pictures of said plurality of 2D pictures I_{f} with f ∈ {1, ...,*F*}, output of the pre-processing module 300, are encoded by the encoding device 400. As described in details in relation with **Figure 19****,** said encoding device 400 predictive-codes an input 2D picture using, possibly, 2D reference pictures (temporal prediction).

Generally speaking, according to the present principles, the 2D pictures I_{f} of said plurality of 2D pictures are coded independently of each other. At least one of said 2D pictures I_{f} is predictive-coded using at least one 2D reference picture.

Coding the 2D pictures of a plurality of 2D pictures independently of each other provides better coding performances compared to the performances obtained by coding/decoding a frame composed of a plurality of 2D pictures representative of picture data of an omnidirectional video.

According to the present principles, when a coded 2D picture I_{f} of said plurality of 2D pictures is used as a 2D reference picture for predictive-coding, a decoded version of said coded 2D picture I_{f} is spatially extended, using at least another decoded 2D picture of said plurality of 2D pictures, once a decoded version of said at least another decoded 2D picture is available.

Thus, for example, when the spatial extension of a decoded version of a coded 2D picture requires multiple picture parts belonging to a same coded 2D reference picture (or to multiple coded 2D reference pictures), said coded 2D reference picture (multiple coded 2D reference pictures) is (are) decoded first, and then the decoded version of said coded 2D picture is spatially extended using the decoded version of those picture parts. Those picture parts may also be obtained from a local or remote memory and a post-processing may also be applied on the decoding of those picture parts. Generally speaking, the decoded version of said coded 2D picture is spatially extended using the decoded version of those picture parts once those picture parts are available.

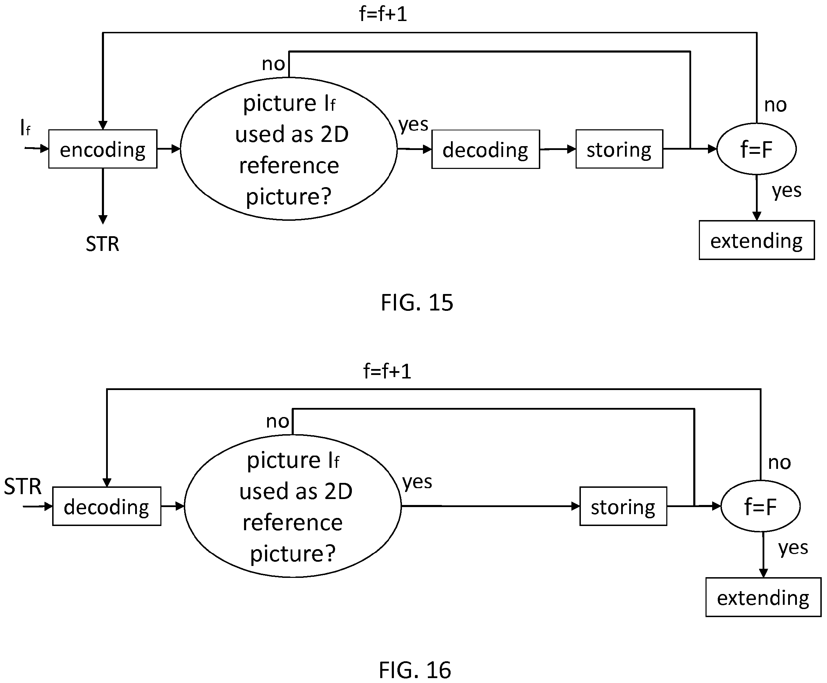

**Figure 15** illustrates a block diagram of the method for encoding a plurality of 2D pictures into a bitstream STR in accordance with an example of the present principles.

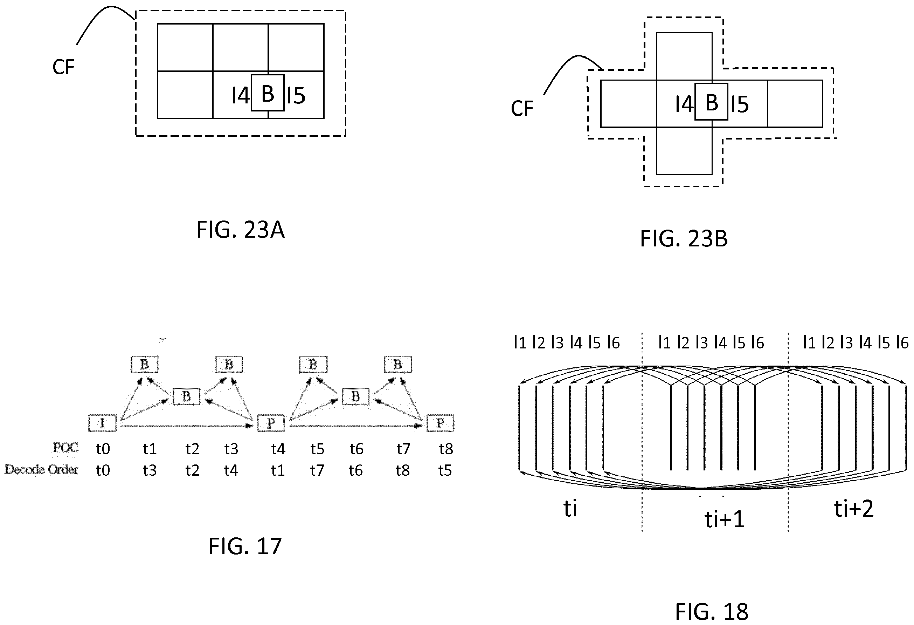

Firstly, at least one 2D picture I_{f} is coded by the encoding device 400 **(****Figure 16****).** Next, when a coded 2D picture I_{f} is used as a 2D reference picture for predictive-coding other 2D pictures representative of, for example, other picture data of the omnidirectional video, the coded 2D picture I_{f} is decoded by the decoding device 700 **(****Figure 17****)** and the decoded version of the coded 2D picture I_{f} is stored in a reference frame memory as illustrated in **Figure 17****.**

Then, the decoded version of the coded 2D picture I_{f} is spatially extended using at least another decoded 2D picture of said plurality of 2D pictures.

According to an embodiment, illustrated in **Fig. 15****,** a decoded version of the coded 2D picture I_{f} is spatially extended once those of the coded 2D pictures I_{f} with f ∈ {1, ..., *F*} that are used as 2D reference pictures are decoded.

According to an embodiment, those of the coded 2D pictures I_{f} with f ∈ {1, ...,*F*} that are used as 2D reference pictures are determined according to the projection function (used for mapping a picture of the omnidirectional video onto a plurality of 2D pictures I_{f} with f ∈ {1, ..., *F*}).

According to an example, illustrated in **Figure 13** right part, six 2D pictures I_{f} with f ∈ {1, *..., F* = 6} are obtained from a cubic mapping (projecting the picture of the omnidirectional video onto a cube). Each border of each of said six 2D pictures is common to two 2D pictures. Thus, for spatially extending the 2D picture I₆, for example, the 2D pictures I₁₋₄ are required and thus the coded 2D pictures I₁₋₄ have to be decoded for spatially extending the decoded version of the coded 2D picture I₆.

In a similar manner, the 2D picture I₁ requires the 2D pictures I_{2, 3, 5, 6}, the 2D picture I₂ requires the 2D pictures I_{1, 4, 5, 6}, the 2D picture I₃ requires the 2D picture I_{1, 4, 5, 6}, the 2D picture I₄ requires the 2D pictures I_{2, 3, 5, 6} and the 2D picture I₅ requires the 2D pictures I_{1, 2, 3,, 4}.

The present principles are not limited to a specific projection function and thus to a specific selection of the 2D pictures to be decoded before spatially expanding another one.

As a variant of this embodiment, all the 2D pictures I_{f} with f ∈ {1,..., *F*} are decoded before extending a decoded version of the coded 2D picture I_{f}.

According to an embodiment, a decoded version of the 2D pictures is spatially extended using a usual padding process as explained in the introduction part (clipping or mirroring).

According to another embodiment, when a border of a decoded version of a 2D picture to be spatially extended is shared with a decoded version of another 2D picture, said border is spatially extended by projecting at least in part said other 2D pictures.

For example, when a vertical border has to be spatially extended, the pixel values along some columns (close to the border) of the other 2D picture are projected onto the 2D picture to be spatially extended by using the projection function (projection equations).Generally speaking, according to the present principles, the 2D pictures I_{f} of a plurality of 2D pictures are decoded independently of each other. At least one of said 2D picture I_{f} is predictive-decoded using at least one 2D references pictures.

According to the present principles, when a decoded 2D picture I_{f}' of said plurality of 2D pictures is used as a 2D reference picture for predictive-decoding, said decoded 2D picture I_{f}' is spatially extended using at least another decoded 2D picture of said plurality of 2D pictures once a decoded version of said at least another decoded 2D picture is available.

Thus, for example, when the spatial extension of a decoded 2D picture requires multiple picture parts belonging to a same coded 2D reference picture (or to multiple coded 2D reference pictures), said coded 2D reference picture (multiple coded 2D reference pictures) is (are) decoded first, and then the decoded 2D picture is spatially extended using the decoded version of those picture parts. Those picture parts may also be obtained from a local or remote memory and a post-processing may also be applied on the decoding of those picture parts. Generally speaking, the decoded 2D picture is spatially extended using the decoded version of those picture parts once those picture parts are available.

**Figure 16** illustrates a block diagram of the method for decoding a plurality of 2D pictures from a bitstream STR in accordance with an example of the present principles.

Firstly, each 2D picture I_{f} is decoded by the decoding device 700 **(****Figure 17****).** Next, when a decoded 2D picture I_{f}' is used as a 2D reference picture, for predictive-decoding other 2D pictures representative of, for example, other picture data of the omnidirectional video, the decoded 2D picture I_{f}' is stored in a reference frame memory as illustrated in **Figure 17****.**

Then, the decoded 2D picture I_{f}' is spatially extended using at least another decoded 2D picture of said plurality of 2D pictures.

According to an embodiment, illustrated in **Fig. 16****,** a decoded 2D picture I_{f}' is spatially extended once those of the coded 2D pictures I_{f} with f ∈ {1, ... , *F*} that are used as 2D reference pictures are decoded.

As a variant of this embodiment, all the 2D pictures I_{f} with f ∈ {1,...,*F*} are decoded before extending a decoded 2D picture I_{f}.

According to an embodiment, a decoded 2D pictures are spatially extended using, for example, a usual padding process.

The present principles are not limited to a specific process for spatially extending a 2D picture.

According to an embodiment, the coding **(****Figure 15****)** and/or the decoding **(****Figure 16****)** and/or extending the 2D pictures **(****Figure 15/16****)** are processed in parallel, i.e. using multiple processors working in parallel.

According to an embodiment, illustrated in **Figure 23A****,** a tile encoding/decoding, as defined in HEVC, is used for encoding/decoding independently of each other the 2D pictures of a plurality of 2D pictures when those 2D pictures form a composite frame CF. **Figure 23A** illustrates the case of a composite frame comprising six 2D pictures arranged according to a specific layout and **Figure 23B** illustrates the case of a composite frame comprising six 2D pictures arranged according to another specific layout.

The present principles are not limited to a specific layout.

The tile encoding/decoding as defined in HEVC does not enable the predictive coding/decoding to separate reference tiles. Thus, the reference pictures used for predictive-coding/decoding a tile still correspond to the entire composite frame, which does not help extending separately each 2D picture of said composite frame. As illustrated in **Figures 23A-B****,** the composite frame CF is spatially extended using a usual padding process (dashed line). The composite frame CF is a 2D reference picture for predictive-coding/decoding and when a reference block B goes over a border of this tile. The reference block B overlaps the tiles I₄ (relative to a 2D picture of the plurality of six 2D pictures, F=6) and I₅ (relative to another 2D picture of the plurality of six 2D pictures), the reference block B comprises values of pixels belonging to the tile I₄ and values of pixels belonging to the tile I₅. Thus, a decoded version of the 2D picture relative to the tile I₄ is spatially extended using a part (a set of pixels) of the decoded 2D picture relative to the tile I₅ and the decoded version of the 2D picture relative to the tile I₄ is spatially extended once a decoded version of said part of the 2D picture relative to the tile I₅ is available, e.g. decoded. The present principles are not limited to these examples described for illustrative purpose.

In video compression, it is usual that the coded video data are organized temporally in a bitstream according to a Group Of Picture structure (GOP).

In HEVC, a GOP structure as exemplarily illustrated in **Figure 18** is usually used. Said GOP structure comprises multiple picture types: I for intra-coded picture, P for predictive-coded picture and B for Bi-predictive coded picture. In a bitstream, coded data are thus organized according to the illustrated exemplary GOP structure as follows. First coded data relative to a I-picture is added to the bitstream at the time instant t₀, followed by coded data relative to three B-picture at the time instants t₁, t₂ and t₃, followed by a coded data relative to a P-picture at time instant t₄, followed by coded data relative to three B-pictures at the time instants t₅, t₆ and t₇ and followed by coded data relative to a P-picture at time instant t₈.

Note that the bitstream is decoded using a different time order and that each decoding time relates to a single 2D picture to be decoded.

According to an embodiment of the present principles, coded data relative to a plurality of 2D pictures (F 2D pictures) are added to the bitstream STR at a time instant ti, followed by coded data relative to another plurality of 2D pictures (F 2D pictures) at a time instant tᵢ₊₁, etc..

When F=6, coded data relative to the six 2D pictures representative of a picture of the omnidirectional video is added at time instant t.

Thus, the decoding scheduling of the bitstream STR remains unchanged compared to a usual decoding scheduling in which a single 2D picture is decoded at each time instant.

According to an embodiment of the present principles, coded data added at a time instant relates to F 2D pictures which are all either intra-coded, or predictive coded or bipredictive coded.

According to an embodiment of the present principles, when the bitstream STR comprises more than one Group Of Pictures structure, the 2D pictures of the plurality of 2D pictures are arranged in each Group Of Pictures according to a same ordering.

For example, when F=6 and when a plurality of 2D pictures 11, 12, 13, 14, 15 and 16 is coded following this order (11 first and 16 last), another plurality of 2D pictures is also coded following this order.

Thus, a constant time interval is maintained between two 2D pictures relative to two temporal successive GOPs. Those 2D pictures relate to a same face of a cube representation when used for the mapping.

**Figure 19** illustrates block diagrams for an exemplary video encoder implementing a method for encoding a 2D picture representative of picture data of an omnidirectional video into a bitstream in accordance with an example of the present principles. Such encoder 400 may be part for instance of an immersive system such as disclosed herein.

The video encoder 400 is disclosed as conforming to an HEVC coder, however the present principles may apply to any 2D video coding schemes processing video as a sequence of 2D pictures.

Classically, the video encoder 400 may include several modules for block-based video encoding, as illustrated in **Figure 19****.**

A 2D picture I_{f} of a plurality of 2D pictures representative of picture data of an omnidirectional video to be encoded is input to the encoder 400.

Firstly, a subdividing module divides the 2D picture I_{f} into a set of units of pixels. The encoding process is described below as applying on a unit of pixels that is called a block BLK. Such a block BLK may correspond to a macroblock, or a coding tree unit or any other layout of subdivision of 2D picture I_{f} comprising luminance samples and chrominance samples, or luminance samples only.

The encoder, as well as the decoder, described below is for illustration purposes. According to some embodiments, encoding or decoding modules may be added, or removed or may vary from the following modules. However, the principles disclosed herein could still be applied to these embodiments.

The encoder 400 performs encoding of each block BLK of the 2D picture I_{f} as follows. The encoder 400 comprises a mode selection unit for selecting a predictive coding mode for a current block BLK of a picture to be coded, e.g. based on a rate/distortion optimization. Such a mode selection unit comprises:
- an inter-prediction module for temporally predicting the current block BLK from reference blocks of a 2D reference picture representative of other picture data of said omnidirectional video, said inter-prediction module comprising:
   - a motion estimation module for estimating motion between one current block BLK of the 2D picture to be coded and a reference block of the 2D reference picture;
   - a motion compensation module for predicting the current block using a reference block pointed by the estimated motion in the 2D reference picture;
      and
   - an intra-prediction module for spatially predicting the current block BLK.

The mode selection unit may also decide whether subdivision of the block is needed according to rate/distortion optimization for instance. In that case, the mode selection unit then operates for each subblock of the current block BLK. In case of an HEVC coder, the subblocks may correspond to CU (Coding Unit), PU (Prediction Unit) or TU (Transform Unit).

Once a coding mode or coding modes is/are selected for the current block BLK, the mode selection unit delivers a predicted block PRED and corresponding syntax elements to be coded in a bitstream STR for performing the same block prediction at the decoder. For example, the estimated motion vector and an index relative to the 2D reference picture are syntax elements to be coded. When the current block BLK has been split, the predicted block PRED is formed by the set of predicted subblocks (CU/PU) delivered by the mode selection unit for each subblocks (CU/PU).

A residual block RES is then obtained by substracting the predicted block PRED from the current block BLK.

The residual block RES is then transformed by a transform processing module delivering a transform block TCOEF of transformed coefficients. In case the transform processing module operates on transform blocks of size smaller than the residual block RES, the transform processing module delivers a set of corresponding transform blocks TCOEF. For instance, a rate/distortion optimization may be performed to decide whether a large transform block or smaller transform blocks should be used. In case of an HEVC coder, the transform processing module operates on block called Transform Unit (TU). The transform processing module then delivers a set of transformed coefficients for each TU of the current block forming a transform block TCOEFF.

Each delivered transform block TCOEF is then quantized by a quantization module delivering a quantized transform block QCOEF of quantized residual transform coefficients.

The syntax elements and quantized residual transform coefficients of the block QCOEF are then input to an entropy coding module to deliver the coded video data of the bitstream STR.

For instance, HEVC uses a contextual arithmetic entropy coding, also known as CABAC. The arithmetic coding performed by the entropy coding module encodes an entire stream of bits, which is obtained after a suitable binarization of the symbols to encode (syntax element, quantized transform coefficients, etc...), by their joint probability, represented by an interval in (0, 1). The entropy coding module performs arithmetic coding by modelling the probabilities of the symbols through context models for different syntax elements and updating model states after encoding every bit. The context models initialize the probabilities based on the neighborhood encoding information.

The bitstream STR generated from the above-described encoding process is then transmitted over a data network or stored on a memory for immersive rendering of an omnidirectional video decoded from the bitstream STR.

Some of the coded 2D pictures are decoded (reconstructed), spatially extended according to the method of **Figure 15****,** and stored in a reference frame memory when said coded 2D pictures are used as a 2D reference picture for coding (inter-prediction module in **Figure 19**) the following 2D pictures representative of picture data of the omnidirectional video.

In that case, the quantized residual transform coefficients of the quantized transform block QCOEF are processed by an inverse quantization module delivering a block TCOEFF' of unquantized transform coefficients. The block TCOEF' is passed to an inverse transform module for reconstructing a block of residual prediction RES'.

When the transform processing module operated on a set of TU from the current block RES, the inverse transform module also operates on the same set of TU. The block RES' is thus formed by the inverse transformed samples for the set of TU.

A reconstructed version REC of the current block BLK is then obtained by adding the prediction block PRED to the reconstructed residual prediction block RES'. The reconstructed block REC is stored in memory for later use by a picture reconstruction module for reconstructing a decoded version I_{f}' of the 2D picture I_{f}. Once all the blocks BLK of the 2D picture I_{f} have been decoded, the picture reconstruction module performs reconstruction of a decoded version I_{f}' of the 2D picture I_{f} from the reconstructed blocks REC. Optionally, deblocking filtering may be applied to the reconstructed picture I' for removing blocking artifacts between reconstructed blocks.

Once the reconstructed picture I_{f}' has been reconstructed and eventually deblocked, the resulting reconstructed picture I_{f}' may then be extended according to the method of **Figure 15** added to the reference picture memory for later use as a 2D reference picture for encoding the following 2D pictures representative of picture data of the omnidirectional video.

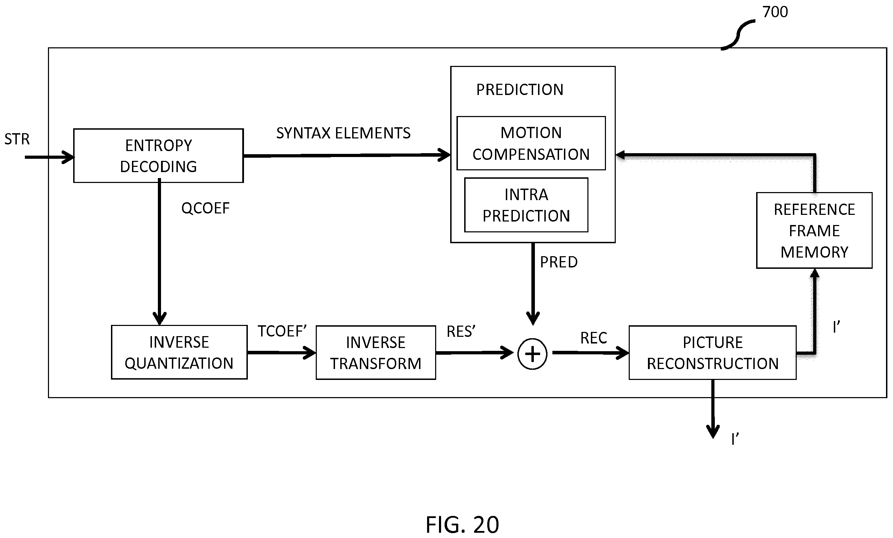

**Figure 20** illustrates block diagrams for an exemplary decoder implementing a method for decoding a 2D picture representative of picture data of an omnidirectional video from a bitstream in accordance with an example of the present principles.

Such decoder 700 may be part for instance of an immersive system such as disclosed herein.

A bitstream STR, representative of coded 2D pictures representative of picture data of an omnidirectional video, comprises coded data representative of at least one current block BLK of at least one 2D picture. Such a current block may have been coded according to an embodiment of the present disclosure.

According to an embodiment, the bitstream STR may also comprise coded data representative of an item of information relating to the projection function.

The video decoder 700 disclosed herein performs the decoding of the pictures according to an HEVC video coding standard. However, the present principles could easily be applied to any video coding standards.

The video decoder 700 performs the reconstruction of the omnidirectional video by decoding from the bitstream the coded 2D pictures on a picture-by-picture basis and by decoding each picture on a block-by-block basis. According to the video compression scheme used, parallel processing may be used for decoding the bitstream either on a picture basis or on a block basis. A 2D picture I' is thus reconstructed from the bitstream STR as follows.

The coded data is passed to the video decoding modules of the video decoder 700 for reconstructing the blocks of the 2D picture I' as follows.

First, the bitstream STR is parsed to obtain coded data and coded syntax elements. Coded data and coded syntax elements are passed to an entropy decoding module that performs entropy decoding and delivers a block QCOEF of quantized transform coefficients to an inverse quantization module and syntax elements to a prediction module.

After entropy decoding, the block QCOEF of quantized transform coefficients is inverse quantized by the inverse quantization module to deliver a block TCOEF' of dequantized transform coefficients.

The block TCOEF' of dequantized transform coefficients is inverse transformed by an inverse transform module delivering a residual prediction block RES'.

The inverse transform module operates the transform for each TU associated to the residual block RES and delivers a block of samples (i.e. inverse transform coefficients) for each TU. The delivered blocks of samples thus form the residual prediction block RES'.

The prediction module builds a prediction block PRED according to the syntax element and using a motion compensation module if a current block has been interpredicted or an intra-prediction module if the current block has been spatially predicted. Said motion compensation builds the prediction block PRED using a reference block pointed by a motion vector in a 2D reference picture. Said motion vector and an index relative to said 2D reference picture are syntax elements.

A reconstructed block REC is then obtained by adding the prediction block PRED to the reconstructed residual prediction block RES'. The reconstructed block REC is stored in memory for later use by a picture reconstruction module for reconstructing a decoded picture I_{f}'. Once all the blocks of the 2D picture I_{f} have been decoded, the picture reconstruction module performs reconstruction of the decoded picture I_{f}' from the reconstructed blocks REC. Optionally, deblocking filtering may be applied to the reconstructed picture I' for removing blocking artifacts between reconstructed blocks.

Some of the reconstructed pictures I' are decoded (reconstructed), spatially extended according to the method of **Figure 16** and stored in a reference frame memory when said reconstructed pictures I_{f}' are used as a 2D reference picture for coding the following 2D pictures representative of picture data of the omnidirectional video.

The reconstructed picture I_{f}' is then stored on a memory or output by the video decoder apparatus 700 to an immersive rendering device 10 as disclosed above. The video decoder apparatus 700 may also be comprised in the immersive rendering device 80. In that case, the reconstructed picture I_{f}' is output by the decoder apparatus to a display module of the immersive rendering device 80.

According to the immersive rendering system implemented, the disclosed decoder apparatus may be comprised in any one of the processing devices of an immersive rendering system such as disclosed herein for instance, in a computer 40, or a game console 60, or a smartphone 701, or an immersive rendering device 80, or an immersive wall 6000.

The apparatus decoder 700 may be implemented as hardware or software or a combination of hardware and software thereof.

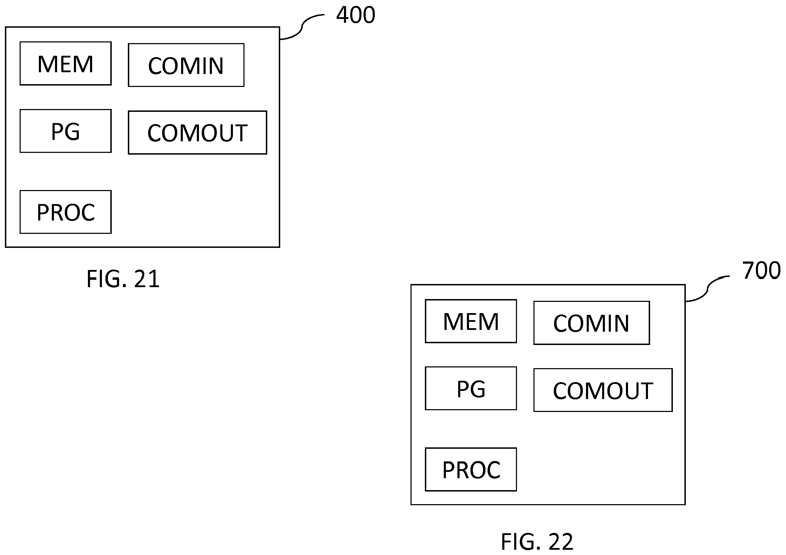

**Figure 21** illustrates the simplified structure of an apparatus 400 for coding a 2D picture representative of picture data of an omnidirectional video into a bitstream in accordance with an example of the present principles. Such an apparatus is configured to implement the method for coding a 2D picture representative of picture data of an omnidirectional video into a bitstream according to the present principle which has been described here above in reference with **Figures 15****,** **17-19****.**

According to an embodiment, the encoder apparatus comprises a processing unit PROC equipped for example with a processor and driven by a computer program PG stored in a memory MEM and implementing the method for coding an omnidirectional video according to the present principles.

At initialization, the code instructions of the computer program PG are for example loaded into a RAM (not shown) and then executed by the processor of the processing unit PROC. The processor of the processing unit PROC implements the steps of the method for coding an omnidirectional video which have been described here above, according to the instructions of the computer program PG.

The encoder apparatus comprises a communication unit COMOUT to transmit an encoded bitstream STR to a data network.

The encoder apparatus also comprises an interface COMIN for receiving a picture to be coded or an omnidirectional video to encode.

**Figure 22** illustrates the simplified structure of an apparatus 700 for decoding a 2D picture representative of picture data of an omnidirectional video from a bitstream in accordance with an example of the present principles. Such an apparatus is configured to implement the method for decoding a 2D picture representative of picture data of an omnidirectional video from a bitstream in accordance with an example of the present principles, which has been described here above in reference with **Figures 16-18****,** **20****.**

According to an embodiment, the decoder apparatus comprises a processing unit PROC equipped for example with a processor and driven by a computer program PG stored in a memory MEM and implementing the method for decoding a bitstream representative of an omnidirectional video according to the present principles.

At initialization, the code instructions of the computer program PG are for example loaded into a RAM (not shown) and then executed by the processor of the processing unit PROC. The processor of the processing unit PROC implements the steps of the method for decoding a bitstream representative of an omnidirectional video which has been described here above, according to the instructions of the computer program PG.

The apparatus may comprise a communication unit COMOUT to transmit the reconstructed pictures of the video data to a rendering device.

The apparatus also comprises an interface COMIN for receiving a bitstream STR representative of the omnidirectional video to decode from a data network, or a gateway, or a Set-Top-Box.

## Claims

1. A method for coding a plurality of 2D pictures representative of picture data of an omnidirectional video into a bitstream, **characterized in that** the method comprises:
- coding the 2D pictures of said plurality of 2D pictures independently of each other, at least one of said 2D pictures being predictive-coded using at least one 2D references picture; and
- when a coded 2D picture of said plurality of 2D pictures is used as a 2D reference picture for predictive-coding, spatially extending a decoded version of said coded 2D picture, using at least another coded 2D picture of said plurality of 2D pictures, once a decoded version of said at least another coded 2D picture is available.

2. A method for decoding a plurality of 2D pictures representative of picture data of an omnidirectional video from a bitstream, **characterized in that** the method comprises:
- decoding the 2D pictures of said plurality of 2D pictures independently of each other, at least one of said 2D pictures being predictive-decoded using at least one 2D references picture; and
- when a decoded 2D picture of said plurality of 2D pictures is used as a 2D reference picture for predictive-decoding, spatially extending said decoded 2D picture using at least another coded 2D picture of said plurality of 2D pictures once a decoded version of said at least another coded 2D picture is available.

3. An apparatus for coding a plurality of 2D pictures representative of picture data of an omnidirectional video into a bitstream, **characterized in that** the apparatus comprises means for:
- coding the 2D pictures of said plurality of 2D pictures independently of each other, at least one of said 2D pictures being predictive-coded using at least one 2D references picture; and
- when a coded 2D picture of said plurality of 2D pictures is used as a 2D reference picture for predictive-coding, spatially extending a decoded version of said coded 2D picture, using at least another coded 2D picture of said plurality of 2D pictures, once a decoded version of said at least another coded 2D picture is available.

4. An apparatus for decoding a plurality of 2D pictures representative of picture data of an omnidirectional video from a bitstream, **characterized in that** the apparatus comprises means for:
- decoding the coded 2D pictures of said plurality of 2D pictures independently of each other, at least one of said coded 2D pictures being predictive-decoded using at least one 2D references picture; and
- when a decoded 2D picture of said plurality of 2D pictures is used as a 2D reference picture for predictive-decoding, spatially extending said decoded 2D picture using at least another coded 2D picture of said plurality of 2D pictures once a decoded version of said at least another coded 2D picture is available.

5. The method of one of claims 1-2 or the apparatus of one of claims 3-4, wherein coding and/or decoding and/or extending the pictures of said plurality of 2D pictures are processed in parallel.

6. The method of one of claims 1-2 or 5 or the apparatus of one of claims 3-4 or 5 wherein the bitstream is organized according to a Group Of Pictures structure comprising at least one intra-coded picture, and/or at least one predictive coded picture and/or at least one bipredictive picture, and wherein the 2D coded pictures of said plurality of 2D pictures are all intra-coded, or all predictive coded or bipredictive picture.

7. The method or the apparatus of claim 6, wherein when the bitstream comprises more than one Group of Pictures, the 2D pictures of the plurality of 2D pictures are arranged in each Group Of Pictures according to a same ordering.

8. A computer program product comprising software code instructions for performing a method according to any one of claims 1 to 2, when the computer program is executed by a processor.

9. An immersive rendering device comprising an apparatus for decoding a bitstream representative of an omnidirectional video according to claim 4.

10. A system for immersive rendering of an omnidirectional video encoded into a bitstream, comprising at least:
- a network interface (600) for receiving said bitstream from a data network;
- an apparatus (700) for decoding said bitstream according to claim 4; and
- an immersive rendering device (900).

11. A bitstream comprising coded data representative of coded 2D pictures of a plurality of 2D pictures representative of picture data of an omnidierectional video, **characterized in that** the bitstream is organized according to a Group Of Pictures structure comprising at least one intra-coded picture, and/or at least one predictive coded picture and/or at least one bipredictive picture, and wherein said 2D coded pictures are all intra-coded, or all predictive coded or bipredictive picture.

12. The bitstream of claim 11, wherein when the bitstream comprises more than one Group of Pictures, the 2D pictures of the plurality of 2D pictures are arranged in each Group Of Pictures according to a same ordering.
